# EUROPÄISCHE PATENTSCHRIFT

(11) **EP 4 073 365 B1**
(45) Veröffentlichungstag und Bekanntmachung des Hinweises auf die Patenterteilung: **01.07.2026**
(21) Anmeldenummer: 21701527.0
(22) Anmeldetag: 22.01.2021
(51) Int. Cl.: F02C 6/20, B64C 27/82

(54) **ROTORSYSTEM FÜR EIN FLUGGERÄT**
ROTOR SYSTEM FOR AN AIRCRAFT
SYSTÈME DE ROTOR POUR AÉRONEF

(30) Priorität: 05.02.2020 DE 102020201417
(43) Veröffentlichungstag der Anmeldung: 19.10.2022
(73) Patentinhaber: kopter germany GmbH, 85635 Höhenkirchen-Siegertsbrunn (DE)
(72) Erfinder: REDMANN, Daniel, 85567 Grafing b. München (DE); STADLMAIR, Nicolai, 81371 München (DE); DUMMEL, Andreas, 85662 Hohenbrunn (DE)
(74) Vertreter: Prüfer & Partner mbB Patentanwälte · Rechtsanwälte
(86) Internationale Anmeldenummer: PCT/EP2021/051486
(87) Internationale Veröffentlichungsnummer: WO 2021/156077

(56) Entgegenhaltungen:
- EP-A1- 2 913 269
- WO-A1-2019/022618
- FR-A1- 2 783 498
- GB-A- 2 452 476
- KR-B1- 101 790 281
- US-A- 6 004 095
- US-A1- 2013 032 664

## Beschreibung

Die Erfindung betrifft ein Rotorsystem für ein Fluggerät.

Der Betrieb von Rotorsystemen bedingt Schallemissionen, die sowohl hinsichtlich ihrer Lautstärke als auch ihrer Frequenz als störend empfunden werden können. Für Anwendungen von Rotorsystemen für Fluggeräte, die in der Nähe bewohnter Gebiete operieren, werden demnach Maßnahmen ergriffen, um die in die Umgebung emittierte Lautstärke an sich oder zumindest für bestimmte Frequenzen zu reduzieren.

Zur Reduzierung der Schallemissionen eines Rotorsystems ist es beispielsweise bekannt, einen aeroakustischen Liner sowie einen aerodynamischen Liner vorzusehen. Durch den aeroakustischen Liner wird der durch den Rotor allgemein generierte Schall verringert, während der aerodynamische Liner auf die Reduzierung der durch die Rotorblattspitzenwirbel induzierten Schallemissionen gerichtet ist.

Die EP 2 913 269 A1 schlägt hierzu für einen Heckrotor eines Hubschraubers vor, einen aerodynamischen Liner in Form eines separaten Kanals im Bereich der Rotorebene anzuordnen. Auf der Luftabgabeseite des Rotors wird zudem ein aeroakustischer Liner angeordnet, der durch vernetzte oder verschachtelte Hohlstrukturen ausgebildet wird. Dieser Stand der Technik weist jedoch verschiedene Nachteile auf. Beispielsweise erfordert die Anordnung des aeroakustischen Liners neben dem aerodynamischen Liner einen entsprechenden Bauraum in axialer Richtung in Bezug auf die Rotationsachse des Rotors. Zudem ist die Wirkung des aeroakustischen Liners auf den Bereich der Luftabgabeseite beschränkt, so dass Schallemissionen auf der Luftansaugseite des Rotors nicht oder nur bedingt gemindert werden. Insbesondere kann der aeroakustische Liner nicht durchgängig implementiert werden, da in dem Bereich des aeroakustischen Liners die Statoren bzw. Tragstreben des Rotors angeordnet sind. Letztlich erhöht sich aber auch durch die zusätzlich eingebrachten Strukturen zur Ausbildung des separaten Kanals für den aerodynamischen Liner sowie für die vernetzten oder verschachtelten einzelnen Hohlstrukturen des aeroakustischen Liners das Gewicht des Heckrotorsystems.

WO 2019/022618 A1 beschreibt eine Umhüllung für einen Propeller eines Fluggeräts, die eine äußere Schicht und zwei oder mehr schallabsorbierende Materialien umfasst, die sich im Inneren der Umhüllung befinden. KR 101790281 B1 offenbart auch den Stand der Technik.

In Anbetracht der mit dem Stand der Technik verbundenen Nachteile ist es Aufgabe der vorliegenden Erfindung, ein Rotorsystem für ein Fluggerät bereitzustellen, das zur Minderung von Schallemissionen sowohl einen aerodynamischen als auch aeroakustischen Liner in kompakter Bauweise ausbildet.

Die erfindungsgemäße Aufgabe wird durch ein Rotorsystem für ein Fluggerät nach Anspruch 1 gelöst. Weitere vorteilhafte Ausgestaltungen der Erfindung ergeben sich aus den Unteransprüchen.

Die Erfindung ist dabei allgemein auf Rotorsysteme für Fluggeräte anwendbar. Insbesondere kann die Erfindung für Heckrotoren eines Hubschraubers vorgesehen werden.

Der Begriff "im Wesentlichen radial" in Bezug auf die Anordnung der Rotorblätter bezieht sich auf die Grundausrichtung der Rotorblätter. Diese müssen jedoch nicht zwingend streng radial ausgebildet sein.

Beispielsweise können die Rotorblätter gegenüber einem geometrischen Radius einen Anstellwinkel aufweisen, wobei die Grundausrichtung immer noch radial im Sinne einer strahlenförmigen Anordnung der Rotorblätter um die Rotorachse ist. Zudem müssen die Rotorblätter nicht äquidistant angeordnet sein, sondern können zueinander unterschiedliche Abstände aufweisen, um beispielsweise die akustische Energie auf mehrere Frequenzen verteilen zu können.

Die Rotorverkleidung bildet über die Hohlstruktur im Zusammenwirken mit dem zumindest abschnittsweise gebildeten gasdurchlässigen Bereich sowohl den aerodynamischen als auch den aeroakustischen Liner aus. Mit anderen Worten werden der aerodynamische und akustische Liner über die Primärstruktur der Rotorverkleidung gebildet, ohne dass es zwingend weiterer separater Auskleidungselemente bedarf. Der Begriff der Primärstruktur dient der Verdeutlichung, dass die zur Ausbildung der Hohlstruktur herangezogene Rotorverkleidung nicht auf weitere nicht zur Rotorverkleidung an sich gehörige zusätzliche Strukturelemente bezogen ist, sondern auf die tatsächlich zur Verkleidung vorgesehenen Elemente der Außenhülle. Demnach wird die Hohlstruktur durch die den Außenseitenflächen der Verkleidung gegenüberliegenden korrespondierenden Innenseitenflächen gebildet. Die Hohlstruktur wird mit anderen Worten somit durch die die Außenhülle der Rotorverkleidung bildenden Verkleidungselemente gebildet. Es wird eine durch den gasdurchlässigen Bereich dringende akustische Welle in ein Volumen eingeleitet, das sich in Bezug auf die Rotationsachse radial von dem gasdurchlässigen Bereich bis zu einer gegenüberliegenden Innenseite der Rotorverkleidung bzw. Primärstruktur erstreckt. Aufgrund der in Bezug auf die Rotationsachse umlaufenden Rotorverkleidung ergibt sich die gleichermaßen umlaufende Hohlstruktur. Diese ist insbesondere ohne Hinzunahme weiterer Versteigungselemente und/oder Hohlraumelemente, die später noch beschrieben werden, durchgängig. Folglich ergibt aus durch die Rotorverkleidung gebildeten Hohlstruktur an sich eine global wirkende Hohlstruktur. Mit anderen Worten erstreckt sich der durch die Hohlstruktur gebildete Hohlraum durchgängig in Umlaufrichtung. Diese kann zwar beispielsweise unter Bezugnahme auf die vorgenannten und noch im Folgenden erläuterten Versteifungselemente und/oder Hohlraumelemente auch auf eine lokal wirkende

Hohlstruktur angepasst werden, dies betrifft jedoch eine Ausführung, die nicht in den Geltungsbereich des Anspruchs 1 fällt.

Selbst unter Berücksichtigung weiterer Strukturelemente, die zusätzlich zur Rotorverkleidung eingebracht werden, wird das Absorptionsverhalten für durch den gasdurchlässigen Bereich eindringende akustische Wellen maßgeblich durch die Rotorverkleidung selbst bestimmt.

Bevorzugt ist der gasdurchlässige Bereich in Umlaufrichtung nicht nur abschnittsweise, sondern vollständig ausgebildet, um im Zusammenspiel mit der Hohlstruktur über den gesamten Umfang in Umlaufrichtung wirken zu können. Dies ergibt sich schon alleine durch die Rotation der Rotorblätter, die entsprechend ihrer Bewegung zunächst erst einmal keine lokalen Schallemissions- und/oder Rotorblattspitzenwirbelmaxima aufweisen. In Wechselwirkung mit anderen Strukturkomponenten des Rotorsystems und/oder in Verbindung mit der Verteilung und/oder Anstellung der Rotorblätter können solche Maxima jedoch durchaus lokal auftreten, so dass eine abschnittsweise Vorsehung eines oder mehrerer gasdurchlässiger Bereiche ausreichend sein kann.

Im Sinne der Wirkweise eines aerodynamischen Liners der Rotorverkleidung treffen die Rotorblattspitzenwirbel bei Betrieb des Rotors auf den in der Rotorebene auf der den Rotorblättern zugewandten Umlauffläche befindlichen gasdurchlässigen Bereich. Durch den gasdurchlässigen Bereich können die Rotorblattspitzenwirbel in die Hohlstruktur eindringen und dort zumindest teilweise absorbiert, insbesondere dissipiert werden. Rotorblattspitzenwirbel, die nicht in die Hohlstruktur eindringen, werden zumindest gestreut. Neben der akustischen Wirkung kann sich die zumindest teilweise Verringerung der Rotorblattspitzenwinkel, beispielsweise durch Dissipation, auch auf den aerodynamischen Widerstand auswirken und somit die Effektivität der Schuberzeugung erhöhen.

Durch den gasdurchlässigen Bereich dringen aber auch gleichermaßen akustische Wellen in die Hohlstruktur ein, wobei die Hohlstruktur akustische Wellen zumindest einer Frequenz zumindest teilweise absorbiert und somit als akustischer Liner wirkt. Grundsätzlich können in diesem Zusammenhang die Begriffe der Absorption und der Dämpfung akustischer Wellen synonym verwendet werden, wobei beispielsweise die Dissipation eine konkrete Form der Absorption bzw. Dämpfung durch Energieumwandlung darstellt. Die auftretenden Frequenzen sind bei vorgegebener Drehzahl des Rotors konstant, wobei jedoch die Amplitude der jeweiligen Frequenz in Abhängigkeit der aktuellen Konstellation des Rotorsystems, beispielsweise in Abhängigkeit der Anstellwinkel der Rotorblätter, variabel ist. Somit kann die Hohlstruktur beispielsweise zur zumindest teilweisen Absorption der Frequenz oder der Frequenzen ausgelegt sein, die als besonders störend empfunden wird oder werden, auch wenn diese ggf. nicht oder nicht immer den höchsten Schallpegel bedingt. Die Ausbildung der zumindest teilweise absorbierenden Eigenschaft der Hohlstruktur kann sowohl geometrisch als auch alternativ oder ergänzend durch entsprechende Materialauswahl getroffen werden.

Durch die Positionierung des kombinierten aerodynamischen und aeroakustischen Liners in der Rotorebene ist eine Implementierung über den kompletten Umfang der Rotorverkleidung ohne Unterbrechungen möglich.

Das vorstehende Rotorsystem bedingt somit eine Abschwächung der aerodynamischen Wirkung der Rotorblattspitzenwirbel über den gasdurchlässigen Bereich, eine zumindest teilweise Absorption und somit Dämpfung eindringender akustischer Wellen durch die Kombination des gasdurchlässigen Bereichs mit der Hohlstruktur sowie eine positive Einflussnahme auf die Effektivität der Schuberzeugung. Da die äußere Kontur der Rotorverkleidung nicht verändert werden muss, bleibt auch die aerodynamische Wirkung der Rotorverkleidung für die Schubgenerierung bestehen. Je nach zu dämpfender Frequenz kann die Rotorverkleidung jedoch unter Berücksichtigung der aerodynamischen Wirkung auch angepasst werden. Alternativ oder ergänzend können aber auch Maßnahmen ergriffen werden, die das in der Hohlstruktur liegende Volumen betreffen, wie dies hinsichtlich zusätzlicher Elemente und/oder Materialstrukturen später nochmals aufgegriffen wird.

In einer Ausgestaltung ist eine dem gasdurchlässigen Bereich auf einer den Rotorblättern abgewandten Seite gegenüberliegende Umlauffläche der Hohlstruktur derart beabstandet, dass der gasdurchlässige Bereich mit der gegenüberliegenden Umlauffläche zumindest abschnittsweise einen Lambda-Viertel-Resonator für die zumindest eine Frequenz ausbildet.

Die dem gasdurchlässigen Bereich auf einer den Rotorblättern abgewandten Seite gegenüberliegende Umlauffläche der Hohlstruktur kann auch als äußere Umlaufinnenfläche bezeichnet werden. Im Gegensatz dazu wäre die der äußeren Umlaufinnenfläche zugewandte Innenseite der den gasdurchlässigen Bereich aufweisenden Umlauffläche eine innere Umlaufinnenfläche. Durch Beabstandung der äußeren und inneren Umlaufinnenflächen gemäß eines Lambda-Viertel-Resonators kann sich eine stehende Welle bzw. vielfache der Viertel-Wellenlänge (Oberwellen) einer korrespondierenden Wellenlänge bzw. Frequenz oder Modenkombination in der Hohlstruktur ausbilden. In Kombination mit dem gasdurchlässigen Bereich, der hierbei einen akustischen Widerstand darstellt, wird die akustische Energie für entsprechende Frequenzen zumindest teilweise in thermische Energie umgewandelt, was eine Absorption darstellt. Der Abstand kann in Umlaufrichtung konstant sein oder sich in Umlaufrichtung auch zumindest abschnittsweise verändern, um lokal auf unterschiedliche Frequenzen abgestimmt zu sein. Eine solche Abstimmung kann alternativ oder ergänzend auch senkrecht zur Umlaufrichtung, also in Bezug auf die Rotationsachse in axialer Richtung, vorgesehen werden. Dies erweist sich insbesondere dann als vorteilhaft, wenn in axialer Richtung unterschiedliche Maxima bestimmter Frequenzen auftreten können, wie sich dies ggf. bei unterschiedlichen Anstellwinkeln der Rotorblätter ergeben kann, worauf später nochmals eingegangen wird. Der Abstand der äußeren und inneren Umlaufinnenflächen kann durch entsprechende Anordnung des Rotorverkleidungsmaterials oder auch entsprechende Materialkonturierungen ausgebildet werden. Materialkonturierungen können beispielsweise Materialquerschnittsvariationen sein, so dass die äußere und innere Umlaufinnenflächen trotz parallel voneinander beabstandetem Material lokal unterschiedliche Abstände aufweisen können.

Alternativ oder ergänzend bildet die Hohlstruktur zumindest abschnittsweise einen Helmholtz-Resonator für die zumindest eine Frequenz aus.

Der Helmholtz-Resonator bietet sich insbesondere für die Absorption bzw. Dämpfung tieferer Frequenzen an. Da mittlere und höhere Frequenzen nur bedingt gedämpft werden, kann die Hohlstruktur die Ausbildung weiterer Resonator-Prinzipien, wie der zumindest abschnittsweisen Ausbildung eines Lambda-Viertel-Resonators, aufweisen.

Neben der geometrischen Ausgestaltung als Lambda-Viertel-Resonator, als Helmholtz-Resonator oder als eine Kombination dieser oder anderer Resonator-Prinzipien können die akustischen Dämpfungseigenschaften auch durch die Materialauswahl und/oder Oberflächenstrukturen begünstigt werden. Beispielsweise können Strukturmerkmale eines Helmholtz-Resonators zur Dämpfung tieferer Frequenzen und Strukturmerkmale eines Lambda-Viertel-Resonators zur Dämpfung mittlerer und höherer Frequenzen genutzt werden.

In einer Weiterbildung ist die umlaufende Hohlstruktur in Umlaufrichtung zumindest in Abschnitten, die in Umlaufrichtung parallel zur Gravitationskraft ausgerichtet sind, fluiddurchlässig ausgebildet.

Durch den gasdurchlässigen Bereich oder auch durch andere Öffnungen in der Rotorverkleidung können Flüssigkeiten, wie Niederschläge oder Reinigungswasser, in die Hohlstruktur eindringen. Diese können je nach Lage der jeweiligen Öffnungen auch wieder ablaufen. Beispielsweise kann bei einer Reinigung Wasser durch einen Abschnitt der Hohlstruktur eindringen, der einen gasdurchlässigen Bereich aufweist, der derart räumlich orientiert ist, dass das Wasser in Richtung der Gravitationskraft über den gasdurchlässigen Bereich abläuft. Allerdings bieten nicht alle Abschnitte der umlaufenden Hohlstruktur eine solche Ablaufmöglichkeit. Insofern sollten insbesondere Abschnitte, die in Umlaufrichtung parallel zur Gravitationskraft ausgerichtet sind und somit auch über gasdurchlässige Bereich in diesem Abschnitt keinen Ablauf aufweisen, fluiddurchlässig ausgebildet sein. Die Fluiddurchlässigkeit ist dabei nicht auf einen Ablauf nach außen gerichtet, sondern betrifft die Fluidleitung in der Hohlstruktur, so dass eindringende Flüssigkeiten in der Hohlstruktur zumindest bis zu einem Abschnitt geleitet werden können, der einen Ablauf erlaubt. Da das erfindungsgemäße Rotorsystem direkt über die Primärstruktur gebildet werden kann, ist somit die interne Fluidleitung über die Hohlstruktur in einfacher Weise realisierbar.

Die zumindest abschnittsweise fluiddurchlässige Ausbildung der Hohlstruktur ermöglicht aber auch die Verlängerung des nutzbaren Resonatorraums in Umlaufrichtung. Hierzu kann angenommen werden, dass die Fluiddurchlässigkeit in diesem Fall auch eine Gasdurchlässigkeit bedingt. Selbst wenn kein Resonatorraum im Sinne einer Ausbildung einer stehenden Welle gebildet wird, können zumindest einzelne Frequenzen, beispielsweise durch Dissipation, gedämpft werden.

Bevorzugt weist die Hohlstruktur zumindest eine Drainageöffnung auf.

Über die Drainageöffnung kann in die Hohlstruktur eingedrungene Flüssigkeit gezielt abgelassen werden. Der Ort des Ablaufs kann somit an eine günstige Stelle gelegt werden und/oder der Zeitpunkt des Ablaufs ist vorgebbar, wenn die Drainageöffnung selektiv öffen- und schließbar ist. Die Drainageöffnung kann über den gasdurchlässigen Bereich gebildet werden. Dies ist in vielen Fällen jedoch unzureichend, da beispielsweise der gasdurchlässige Bereich eines Heckrotors eines Hubschraubers im Stillstand nicht den tiefsten Punkt der Hohlstruktur bildet. Demnach könnte der gasdurchlässige Bereich in diesem Fall lediglich als Überlauf fungieren, nicht aber Flüssigkeiten eigenständig aus der Hohlstruktur ableiten, die unterhalb des gasdurchlässigen Bereichs liegen. Entsprechend kann eine separate Drainageöffnung von Vorteil sein.

Insbesondere weisen die Rotorblätter einen um eine in Bezug auf die Rotationsachse radiale Achse variabel einstellbaren Anstellwinkel auf und der gasdurchlässige Bereich erstreckt sich in Bezug auf die Rotationsachse in axialer Richtung zumindest über einen Bereich, der die über die Anstellwinkel erreichbaren Rotorblattpositionen überdeckt.

In Abhängigkeit auszuführender Flugmanöver werden die Anstellwinkel der Rotorblätter verändert. Somit ändert sich auch die Position des Bereichs in dem Rotorblattspitzenwirbel erzeugt werden. Um alle mit den Anstellwinkeln verbundenen Bereichspositionen der Rotorblattspitzenwirbel zu umfassen, erstreckt sich der gasdurchlässige Bereich zumindest abschnittsweise, insbesondere in Umlaufrichtung über die gesamte Umlauffläche, in axialer Richtung zumindest über den Bereich, über den alle Rotorblattpositionen gemäß den Rotorblattanstellwinkeln überdeckt werden können. Andernfalls, also bei einer axialen Erstreckung des gasdurchlässigen Bereichs, die nicht alle einstellbaren Rotorblattpositionen überdeckt, ist die aerodynamische Wirkung des gasdurchlässigen Bereichs nicht für alle Rotorblattpositionen bzw. Rotorblattanstellwinkel gegeben oder zumindest wesentlich eingeschränkt.

Da die Ausbreitung der Rotorblattspitzenwirbel in radialer Richtung in Bezug auf die Rotationsachse des Rotors nicht auf den die Rotorblattspitze begrenzten Bereich beschränkt ist, sich die Rotorblattspitzenwirbel also nicht rein radial, sondern auch in axialer Richtung streuend ausbreiten können, ist der gasdurchlässige Bereich in axialer Richtung insbesondere größer als der Überdeckungsbereich der Rotorblattpositionen ausgebildet. Bevorzugt ist der gasdurchlässige Bereich ausgehend von der Rotorebene in axialer Richtung nach außen hin zumindest auf einer Seite, insbesondere auf beiden Seiten, größer als der auf diesen Abschnitt bezogene Überdeckungsbereich der Rotorblattpositionen gemäß den Rotorblattanstellwinkeln.

In einer Ausgestaltung beträgt der Anteil einer Porosität des gasdurchlässigen Bereichs 5% bis 90%.

Der gasdurchlässige Bereich wird grundsätzlich als der Bereich definiert, der eine überwiegende Gasdurchlässigkeit im Vergleich zu anderen Bereichen der Rotorverkleidung aufweist. Der Begriff "überwiegend" bezieht sich dabei nicht zwingend auf eine Gasdurchlässigkeit von über 50%, sondern auf eine als gasdurchlässig identifizierbare Materialeigenschaft. Der Bereich wird dabei über die äußersten gasdurchlässigen Öffnungen, wie beispielsweise Poren, begrenzt, bevor die Rotorverkleidung in einen gasundurchlässigen Materialbereich übergeht.

Wird nun also der gasdurchlässige Bereich durch Poren gebildet, so liegt der Anteil des Hohlraumvolumens, also des Volumens aller Poren in diesem Bereich, zum Gesamtvolumen dieses Bereichs bei 5% bis 90%. Bei einem geringeren Anteil des Hohlraumvolumens werden die Rotorblattspitzenwinkel überwiegend reflektiert und nicht mehr in die Hohlstruktur eingeleitet. Der aerodynamische Liner arbeitet somit nicht mehr effektiv. Ebenso leidet die akustische Bandbreite des Lambda-Viertel-Resonators und gleichzeitig kommt es zur einen Verschiebung der Wirkungsweise des Liners von Lambda-Viertel-Resonator in die Richtung eines Helmholz-Resonators für sehr tiefe Frequenzen, die keine Relevanz für den hörbaren Bereich mehr darstellen. Bei einem Anteil von mehr als 90% des Hohlraumvolumens kann das Absorptions- bzw. Dämpfungsvermögen maßgeblich vermindert werden, wenn durch die Poren eindringende Rotorblattspitzenwirbel und/oder akustische Wellen ohne wesentliche Dämpfung wieder austreten können.

Gemäß einer Weiterbildung verändert sich die Porosität von der Rotorebene aus in axialer Richtung in Bezug auf die Rotationsachse. Insbesondere nimmt die Porosität von der Rotorebene aus zu zumindest einer Seite nach außen hin zu.

Durch eine Veränderung der Porosität in axialer Richtung kann die akustische Impedanz und somit das akustische Verhalten des aerodynamischen und aeroakustischen Liners lokal angepasst werden. Dies kann insbesondere bei Rotorblättern mit einstellbaren Anstellwinkeln von Vorteil sein, da sich über die Anstellwinkel die Frequenzamplituden verschieben. Bevorzugt ist dabei eine größere Porosität, also ein größeres Hohlraumvolumen, in den Außenbereichen des gasdurchlässigen Bereichs vorzusehen, die bei größeren Anstellwinkeln der Rotorblätter wirkungsrelevant sind. Die veränderte Porosität kann dabei als Porosität pro Flächeneinheit angegeben werden.

Alternativ oder ergänzend verändert sich die Porosität in Umlaufrichtung des gasdurchlässigen Bereichs.

Eine in Umlaufrichtung veränderte Porosität ermöglicht eine Anpassung der Impedanz und somit des akustischen Verhaltens entlang des Umfangs. Somit kann das Zusammenwirken der Schallemissionen mit unterschiedlichen Strukturelementen entlang des Umfangs, auch unter möglicher Berücksichtigung einstellbarer Anstellwinkel der Rotorblätter, berücksichtigt werden.

Bei einer Kombination veränderter Porosität in axialer Richtung sowie in Umlaufrichtung können die akustischen Eigenschaften sowohl struktur- als auch betriebsbedingt optimiert werden.

In einer Ausgestaltung wird der gasdurchlässige Bereich durch Mikroperforation, ein Lochblech und/oder ein Drahtgewebe gebildet.

Durch Mikroperforation eines Rotorverkleidungsprofils oder -profilabschnitts kann eine Gasdurchlässigkeit für den gasdurchlässigen Bereich ohne Strukturunterbrechung eingebracht werden. Zudem kann die Verteilung der Mikroperforation bedarfsweise und präzise umgesetzt werden. Die separate Einbringung eines Lochblechs und/oder eines Drahtgewebes erlaubt eine flexible Anpassung des akustischen Verhaltens durch Austausch des jeweiligen Einsatzes. Darüber hinaus ist es in einem solchen Fall möglich, verschiedene Materialeigenschaften unabhängig vom Material der eigentlichen Rotorverkleidung zu nutzen.

Gemäß einer Weiterbildung weist die Hohlstruktur Versteifungselemente und/oder Hohlstrukturelemente auf, die in ihrer Position und/oder Ausgestaltung eine schallabsorbierende Wirkung aufweisen oder eine Schallabsorption begünstigen. Versteifungselemente, die gezielt zur Stabilisierung eingesetzt werden, oder aber auch andere Hohlstrukturelemente, die beispielsweise einer Leitungsführung dienen, können somit ebenfalls genutzt werden, um die schalldämmenden oder/und schalldämpfenden Eigenschaften des Rotorsystems zu verbessern. Auch hierdurch kann auf zusätzliche alleinig zur Schallabsorption vorgesehene Komponenten und Strukturen verzichtet werden. Diese fallen aber nicht in den Geltungsbereich des Anspruchs 1.

Die Positionierung kann in Umlaufrichtung in Abhängigkeit der zumindest teilweise zu absorbierenden Frequenz, beispielsweise bedingt durch die Eigenfrequenzen des im Inneren der Gesamtstruktur oder akustisch getrennter Teilräume eingeschlossenen Gas-Volumens, erfolgen. Alternativ oder ergänzend kann die Positionierung in Umlaufrichtung auch in Abhängigkeit des lokalen Zusammenspiels der Schallemissionen mit jeweiligen Strukturkomponenten vorgenommen werden. Durch die Positionierung kann über die Versteifungselemente und/oder Hohlstrukturelemente somit die Tiefe und/oder das Volumen der Hohlstruktur beeinflusst werden, um die zumindest teilweise Absorption zumindest einer Frequenz gezielt zu erhöhen. Entsprechend ist es hierdurch auch möglich, eine global akustisch wirkende Hohlstruktur, wie sie beispielsweise durch eine in Umlaufrichtung durchgängige Struktur ohne Versteifungselemente und/oder Hohlstrukturelemente gebildet werden kann, in eine lokal akustisch wirkende Hohlstruktur zu transferieren.

Die Ausgestaltung der Versteifungselemente und/oder Hohlstrukturelemente bezieht sich im Gegensatz dazu auf die konkrete geometrische Konstruktion, wie die Kontur oder Materialdicke, das einzusetzende Material und/oder verschiedene Oberflächeneigenschaften, wie sie über Beschichtungen oder Oberflächenstrukturierungen umsetzbar sind.

Insbesondere werden durch die Hohlstruktur im Wesentlichen eindringende akustische Wellen in einem breitbandigen Frequenzbereich absorbiert.

Die breitbandige Auslegung betrifft maßgeblich die Wirkung der Struktur als aeroakustischer Liner, die durch variable Tiefen der Hohlstruktur, also Beabstandungen in radialer Richtung in Bezug auf die Rotationsachse, begünstigt wird. Weiterhin kann durch die geeignete Wahl der Perforation des gasdurchlässigen Bereichs die Bandbreite auf Kosten der absoluten Absorption des Liners erhöht werden.

In einer Ausgestaltung werden durch die Hohlstruktur im Wesentlichen eindringende akustische Wellen in einem Frequenzbereich von 30 Hz bis 1500 Hz zumindest teilweise absorbiert.

In diesem Frequenzbereich treten gerade die Frequenzen auf, die ebenso als besonders störend empfunden werden. Insbesondere umfasst dieser Frequenzbereich aber auch Frequenzen mit üblicherweise deutlich wahrnehmbaren Amplitudenmaxima. Entsprechend kann somit bei geeigneter Wahl der Lautstärkepegel insgesamt gesenkt werden.

Gemäß einer Weiterbildung umfasst das Rotorsystem zumindest eine Tragstrebe, die auf einer Luftansaugseite des Rotorsystems angeordnet ist.

Tragstreben, die teilweise auch als Stator bezeichnet werden, dienen der Aufhängung der Rotornabe. Diese sind üblicherweise auf der Luftabgabeseite eines Rotorsystems angeordnet, wobei der in axialer Richtung in Bezug auf die Rotationsdachse breitere Luftkanal, der durch die Rotorverkleidung gebildet wird, die mit dieser Anordnung verbundenen Schallemissionen ausgleicht. Ordnet man nun jedoch die zumindest eine Tragstrebe zur Aufhängung der Rotornabe auf der Luftansaugseite an, reduzieren sich die ansonsten durch das Auftreffen der durch den Rotor beschleunigten Luft auf die Tragestrebe bedingten Schallemissionen. Mit anderen Worten wird somit eine weitere Schallquelle auf der Luftabgabeseite vermieden, so dass die axiale Breite des Luftkanals verringert werden kann. Als Luftansaugseite wird die Seite verstanden, auf der für den überwiegenden Teil der Flugmanöver Luft angesaugt wird. Analog hierzu wird als Luftabgabeseite die Seite verstanden, auf der für einen überwiegenden Teil der Teil Flugmanöver Luft abgegeben wird.

Bevorzugt ist die zumindest eine Tragstrebe in Bezug auf die Rotationsachse exzentrisch angeordnet.

Die exzentrische Anordnung unterstützt die verminderte Schallemission aufgrund der zeitlich versetzten Wechselwirkung zwischen der Nachlaufdelle im Geschwindigkeitsprofil der Anströmung bedingt durch Abschattungswirkung der Tragstrebe und der Vorderkante der rotierenden Rotorblätter im regulären Betrieb, also zum Drehmomentenausgleich des Hauptrotors. Im Falle der negativen Anstellwinkel der Rotorblätter durch Manöver des Flugapparates kommt es ebenfalls zur keiner gleichzeitigen Wechselwirkung. Hierbei ist jedoch die Wechselwirkung zwischen den von den rotierenden Rotorblättern induzierten Wirbeln und den Tragstreben, die verantwortlich für eine Schallerzeugung sind, gemeint.

Merkmale, Zweckmässigkeiten und Vorteile der Erfindung werden nachfolgend auch anhand von Ausführungsbeispielen unter Bezugnahme auf die Zeichnungen beschrieben.

Es zeigt
- Fig. 1: eine schematische Darstellung eines Fluggeräts mit einem Rotorsystem gemäß einer beispielhaften Ausführungsform der Erfindung;
- Fig. 2: eine perspektivische Ansicht des Rotorsystems gemäß Fig. 1;
- Fig. 3: einen perspektivischen Querschnittsausschnitt des Rotorsystems gemäß der Figuren 1 und 2 in einer Schnittebene parallel zur Rotationsachse;
- Fig. 4: eine schematische Querschnittsansicht des Rotorsystems gemäß Figur 3 mit Blickrichtung auf die Schnittebene und Darstellung des Anstellbereichs der Rotorblätter;
- Fig. 5: einen perspektivischen Querschnittsausschnitt des Rotorsystems gemäß der Figuren 1 und 2 in einer Schnittebene senkrecht zur Rotationsache.

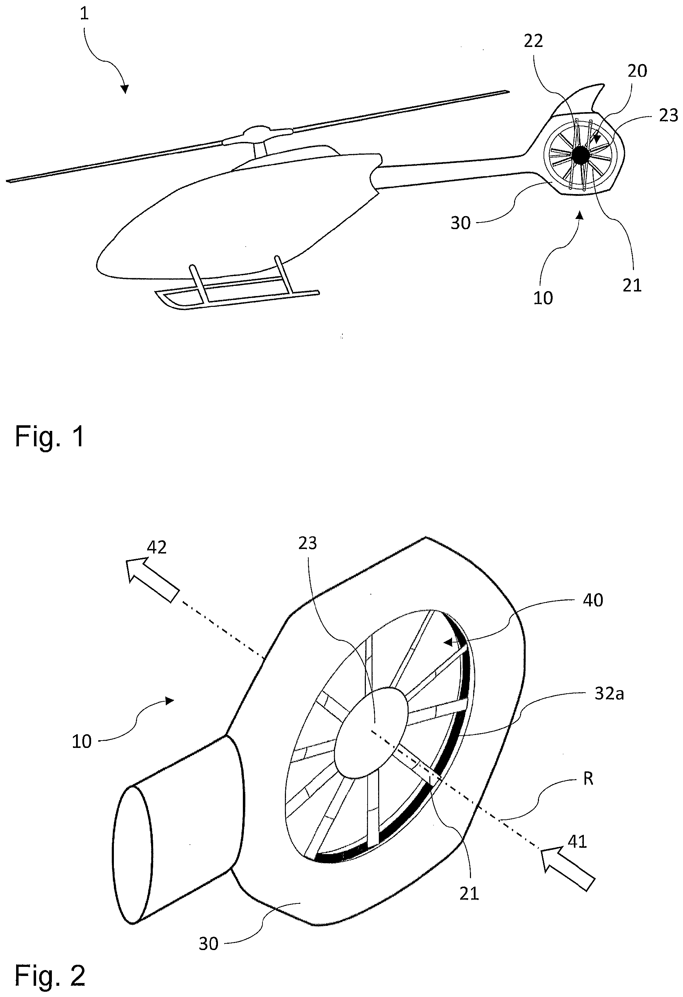

Fig. 1 zeigt ein Fluggerät 1, hier einen Hubschrauber, mit einem Rotorsystem 10, der in der gezeigten Ausführungsform als Heckrotorsystem des Hubschraubers eingesetzt wird. Das Rotorsystem 10 umfasst einen Rotor 20, der um eine Rotornabe 23, die durch vorzugsweise mehrere Tragstreben 22 gehalten wird, angeordnete Rotorblätter 21 aufweist, und eine Rotorverkleidung 30. Die Tragstreben 22 sind auf einer Luftansaugseite 41 (Fig. 2) angeordnet, um eine weitere Schallquelle auf einer Luftabgabeseite 42 (Fig. 2) zu vermeiden. Zudem ist eine in Bezug auf die Rotationsachse R exzentrische Anordnung der Tragestreben 22 vorgesehen, die sich ebenfalls akustisch positiv auswirkt. Die Luftansaugseite 41 bzw. die Luftabgabeseite 42 sind jeweils die Seiten, auf denen die Luft für einen überwiegenden Teil der Flugmanöver angesaugt bzw. abgegeben wird. Mit anderen Worten kann auf der Luftansaugseite 41 bei entsprechend negativem Anstellwinkel der Rotorblätter 21 auch Luft abgegeben werden, wobei dies aber nur in wenigen Fällen während des Flugbetriebs anzunehmen ist, so dass solche Fälle für die Definition der Luftansaugseite 41 vernachlässigbar sind. Dies trifft gleichermaßen für die Luftabgabeseite in umgekehrter Konstellation zu.

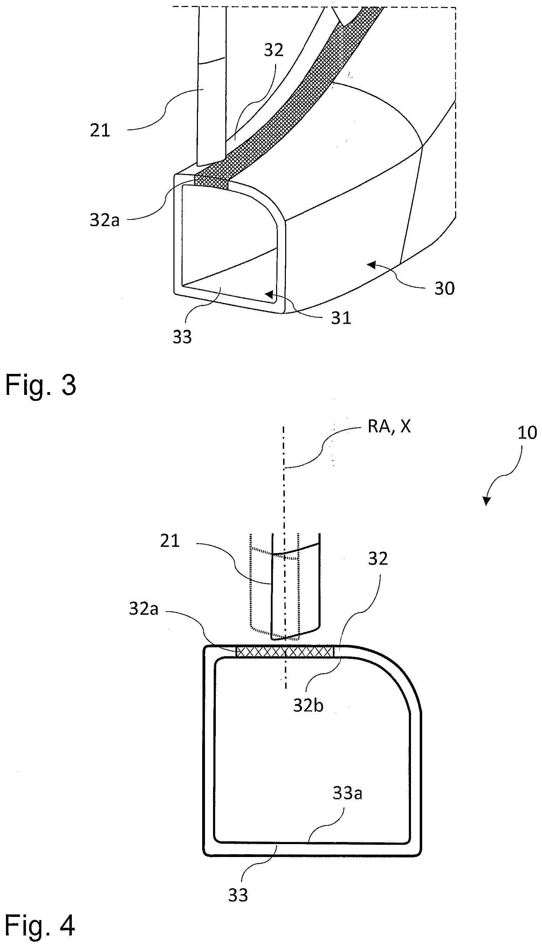

Gemäß Fig. 2 umgibt die Rotorverkleidung 30 den Rotor 20 in Bezug auf die Rotationsachse R in Umlaufrichtung und begrenzt einen sich in axialer Richtung der Rotationsachse R erstreckenden Luftkanal 40 des Rotors 20. Durch die Rotation der Rotorblätter 21 um die Rotationsachse R wird Luft von der Luftansaugseite 41 auf die Luftabgabeseite 42, die auch als Schubseite bezeichnet werden kann, gefördert. Die Luftströmungsrichtung wird in Fig. 2 auch nochmals durch die eingetragenen Pfeile verdeutlicht, wobei sich diese in Abhängigkeit der Anstellung der Rotorblätter auch umkehren kann. Wie weiter aus Fig. 4 ersichtlich, weist in der durch die Rotorblätter 21 gebildeten Rotorebene RA senkrecht zur Rotationsachse R die dem Rotor 20 zugewandte Umlauffläche 32 der Rotorverkleidung 30 einen gasdurchlässigen Bereich 32a auf, der durch die Rotorebene RA geschnitten wird und sich in Bezug auf die Rotationsachse R axial zu beiden Seiten der Rotorebene RA erstreckt.

Im Detail zeigt hierzu Fig. 3 einen perspektivischen Querschnittsausschnitt des Rotorsystems 10 gemäß der Figuren 1 und 2 in einer Schnittebene parallel zur Rotationsache R. Der gasdurchlässige Bereich 32a wird in dieser beispielhaften Ausführungsform durch ein Lochblech mit Mikroperforationen ausgebildet, das in die Rotorverkleidung 30 eingesetzt und fixiert wird. Die durch die Mikroperforation eingebrachte Porosität beträgt beispielsweise 50% und ist in Umlaufrichtung sowie in axialer Richtung in Bezug auf die Rotationsachse R konstant. Die Porosität kann jedoch auch in Umlaufrichtung sowie in axialer Richtung in Bezug auf die Rotationsachse R variieren und/oder kleiner oder größer als 50% sein. Die Auswahl der Porosität oder ihrer Verteilung kann sich aus dem jeweiligen Optimierungsziel hinsichtlich aeroakustischer oder aerodynamischer Wirkungen im Zusammenspiel mit einem jeweiligen Strukturaufbau ergeben.

Der gasdurchlässige Bereich 32a überdeckt die radiale Projektion der Rotorblattspitze der Rotorblätter 21, so dass in dem Spalt zwischen den Rotorblattspitzen und dem gasdurchlässigen Bereich 32a generierte Rotorblattspitzenwirbel durch den gasdurchlässigen Bereich 32a in die durch die Rotorverkleidung 30 gebildete Hohlstruktur 31 eingeleitet werden können, um dort zu dissipieren oder anderweitig gedämpft zu werden, so dass eine aerodynamische Wirkung erzielt wird. Die aerodynamische Wirkung bezieht sich dabei einerseits auf eine akustische Wirkung durch Eliminierung oder Verlagerung der mit den Rotorblattspitzenwirbeln verbundenen akustischen Quellen in die Hohlstruktur 31. Anderseits wird die Effizienz des Rotorsystems 10 durch die durch die Abschwächung und/oder Verlagerung der Rotorblattspitzenwirbel bedingte Widerstandsreduzierung erhöht. Zudem wird durch den gasdurchlässigen Bereich 32a gekoppelt mit dem durch die Hohlstruktur 31 gebildeten Volumen eine aeroakustische Funktion umgesetzt, bei der auch eine rein akustische Wirkung für in die Hohlstruktur 31 über den gasdurchlässigen Bereich 32a eingekoppelte akustische Wellen, die beispielsweise auch durch andere Komponenten als durch die Rotorblattspitzen bei Betrieb des Rotors 20 generiert werden, durch zumindest teilweise Absorption zumindest einer Frequenz erzielt wird. Hierzu ist in der dargestellten Ausführungsform die dem Rotor 20 zugewandte Innenfläche der dem Rotor 20 abgewandten Umlauffläche 33, also eine äußere Umlaufinnenfläche 33a, von der dem Rotor 20 abgewandten Innenfläche der dem Rotor 20 zugewandten Umlauffläche 32, also einer inneren Umlaufinnenfläche 32b, derart beabstandet, dass für zumindest eine Frequenz ein Lambda-Viertel-Resonator ausgebildet wird.

Demnach wird durch die Positionierung und Dimensionierung des gasdurchlässigen Bereichs 32a in Zusammenwirken mit dem Volumen der Hohlstruktur 31 ein kombinierter aerodynamischer und aeroakustischer Liner ausgebildet.

Fig. 4 zeigt nochmals eine schematische Querschnittsansicht des Rotorsystems 10 gemäß Figur 3 mit Blickrichtung auf die Schnittebene zur Veranschaulichung des einstellbaren Anstellbereichs der Rotorblätter 21 und der Überdeckung der Rotorblattspitzen über diesen Anstellbereich durch den gasdurchlässigen Bereich 32a. Hierzu sind in Fig. 4 die maximal erreichbaren Positionen der Rotorblätter 21 bei Rotation um die in Bezug auf die Rotationsachse R radiale Achse X für die Rotorblattanstellung eingezeichnet. Ausgehend von der Rotorebene RA, die mit der radialen Achse X zusammenfällt, erstreckt sich der gasdurchlässige Bereich 32a zu beiden Seiten in axialer Richtung in Bezug auf die Rotationsachse R, wobei der gasdurchlässige Bereich 32a die Maximalpositionen der Rotorblattspitzen überdeckt. In der dargestellten beispielhaften Ausführungsform ist der gasdurchlässige Bereich 32a zudem gegenüber den Maximalpositionen der Rotorblattspitzen vergrößert, um auch gestreute Rotorblattspitzenwirbel in die Hohlstruktur einleiten zu können.

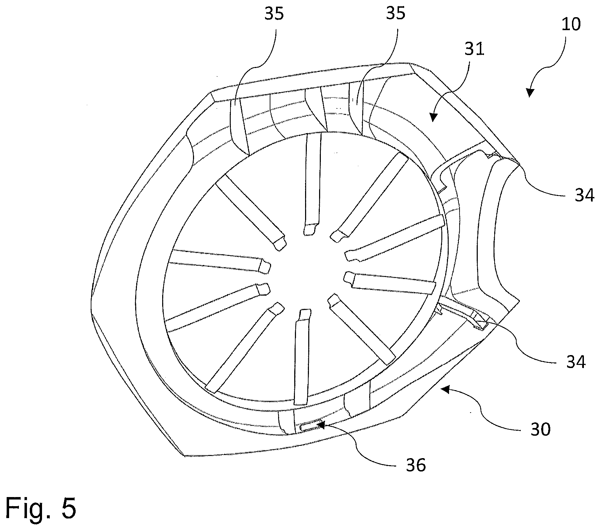

Anhand der Fig. 5 wird ein perspektivischer Querschnittsausschnitt des Rotorsystems 10 gemäß der Figuren 1 und 2 in einer Schnittebene senkrecht zur Rotationsache R beispielhaft dargestellt. Die Rotorverkleidung 30 bildet hier eine Hohlstruktur 31 mit in Umlaufrichtung unterschiedlichen Abständen der äußeren und inneren Umlaufflächen aus. Entsprechend werden lokal unterschiedliche Lambda-Viertel-Resonatoren ausgebildet, so dass lokal unterschiedliche Frequenzen zumindest teilweise absorbierbar sind, was die Lautstärke insgesamt vermindert und dem Liner die breitbandige akustische Wirkung verleiht. Insbesondere können die unterschiedlichen Beabstandungen derart vorgesehen werden, dass bevorzugt tonale Komponenten entsprechend der Drehfrequenz des Rotors-und/oder anderweitig als besonders störend empfundene Frequenzen gedämpft werden.

Zudem weist die Hohlstruktur 31 verschiedene Versteifungselemente 34 und Hohlstrukturelemente 35 auf, welche lediglich der technischen Erläuterung dienen, die nicht in den Geltungsbereich des Anspruchs 1 fallen. Die Versteifungselemente 34 dienen hier beispielsweise als Blenden und nehmen hinsichtlich ihrer Dimensionierung und Positionierung ebenfalls Einfluss auf die Dämpfung in die Hohlstruktur eingeleiteter bzw. sich darin ausbreitender akustischer Wellen. In ähnlicher Weise können die zusätzlich eingebrachten Hohlstrukturelemente 35 Kammern in der Hohlstruktur 31 ausbilden, um beispielsweise jeweils lokal unterschiedliche Resonatorvolumina zu bilden und hierdurch die Dämpfung von Frequenzen zu beeinflussen. Dennoch wird hier das Dämpfungsvermögen maßgeblich durch die Primärstruktur der Rotorverkleidung 30 bestimmt.

Gemäß Fig. 5 weist darüber hinaus die Rotorverkleidung 30 eine Drainageöffnung 36 auf, über die eine in die Hohlstruktur 31 eingedrungene Flüssigkeit abgeleitet werden kann. Die Drainageöffnung 36 befindet sich in einem in Gravitationsrichtung unteren Bereich der Rotorverkleidung 30, in dem sich eine Flüssigkeit gravitationsbedingt sammelt. Hierzu ist die Hohlstruktur 31 bevorzugt umlaufend partiell fluiddurchlässig, also als umlaufender durchgängiger Fluidkanal, ausgebildet. Auch wenn Versteifungselemente 34 und/oder Hohlstrukturelemente 35 in der Hohlstruktur 31 angeordnet sind, sollten diese dann entweder zumindest abschnittsweise fluiddurchlässig sein oder in Positionen angeordnet werden, die eine anderweitige Ausleitung einer Flüssigkeit ermöglichen. Letzteres kann anhand der in Fig. 5 gezeigten Hohlstrukturelemente 35 verdeutlicht werden. Sofern diese Hohlstrukturelemente nicht fluiddurchlässig ausgeführt sind, sind sie zumindest in Positionen angeordnet, in denen eine in der durch die Hohlstrukturelemente 35 gebildeten oberen Kammer befindliche Flüssigkeit über den hier nicht gezeigten gasdurchlässigen Bereich 32a abgeführt werden kann. Der gasdurchlässige Bereich 32a wäre dann somit auch fluiddurchlässig.

Die Erfindung ist nicht auf die beschriebene Ausführungsform beschränkt. Insbesondere sind bestimmte Merkmale möglicher Varianten oder Weiterbildungen grundsätzlich auch auf die oder andere Ausführungsformen anwendbar, sofern sich dies nicht vernünftigerweise ausschließt. Auch wenn beispielsweise die Rotornabe 23 durch zwei Tragestreben 22 gehalten wird, kann auch nur eine Tragstrebe vorgesehen werden. Ebenso ist es möglich, mehr als zwei Tragstreben zu verwenden. Insbesondere ist aber auch die Verwendung des Rotorsystems 10 nicht auf ein Heckrotorsystem eines Hubschraubers beschränkt, sondern lässt sich auch für andere Fluggeräte, wie Drohnen oder Flugtaxen, einsetzen.

### Liste der Bezugszeichen

- 1: Fluggerät
- 10: Rotorsystem
- 20: Rotor
- 21: Rotorblatt
- 22: Tragstrebe
- 23: Rotornabe
- 30: Rotorverkleidung
- 31: Hohlstruktur
- 32: Umlauffläche (dem Rotor zugewandt)
- 32a: gasdurchlässiger Bereich
- 32b: innere Umlaufinnenfläche
- 33: Umlauffläche (dem Rotor abgewandt)
- 33a: äußere Umlaufinnenfläche
- 34: Versteifungselement
- 35: Hohlstrukturelement
- 36: Drainageöffnung
- 40: Luftkanal
- 41: Luftansaugseite
- 42: Luftabgabeseite
- R: Rotationsachse
- RA: Rotorebene
- X: radiale Achse (Rotorblattanstellung)

## Patentansprüche

1. Rotorsystem (10) für ein Fluggerät (1), umfassend:
einen antreibbaren Rotor (20) mit mehreren Rotorblättern (21), die im Wesentlichen radial um eine Rotationsachse (R) des Rotors (20) angeordnet sind, wobei eine Ebene senkrecht zur Rotationsachse (R), die die Rotorblätter (21) in radialer Richtung durchläuft, eine Rotorebene (RA) bildet, und
eine Rotorverkleidung (30), die den Rotor (20) in Bezug auf die Rotationsachse (R) umlaufend umgibt und einen sich in axialer Richtung der Rotationsachse (R) erstreckenden Luftkanal (40) des Rotors (20) begrenzt,
wobei die Rotorverkleidung (30) eine in Bezug auf die Rotationsachse (R) umlaufende Hohlstruktur (31) ausbildet, die auf ihrer dem Rotor (20) in radialer Richtung zugewandten Umlauffläche (32) zumindest abschnittsweise einen gasdurchlässigen Bereich (32a) aufweist, wobei die Rotorebene (RA) den gasdurchlässigen Bereich (32a) schneidet, und
wobei die Hohlstruktur (31) derart konfiguriert ist, dass durch den gasdurchlässigen Bereich (32a) in die Hohlstruktur (31) eindringende akustische Wellen zumindest einer Frequenz durch die Hohlstruktur (31) zumindest teilweise absorbiert werden, **gekennzeichnet dadurch, dass**
die Rotorverkleidung eine über die Hohlstruktur im Zusammenwirken mit dem zumindest abschnittsweise gebildeten gasdurchlässigen Bereich gebildete Primärstruktur aufweist, die sowohl einen aerodynamischen als auch einen aeroakustischen Liner bildet, ohne dass es weiterer separater Auskleidungselemente bedarf, wobei sich der durch die Hohlstruktur gebildete Hohlraum durchgängig in Umlaufrichtung erstreckt.

2. Rotorsystem (10) nach Anspruch 1, wobei eine dem gasdurchlässigen Bereich (32a) auf einer den Rotorblättern (21) abgewandten Seite gegenüberliegende Umlauffläche (33) der Hohlstruktur (31) derart beabstandet ist, dass der gasdurchlässige Bereich (32a) mit der gegenüberliegenden Umlauffläche (33) zumindest abschnittsweise einen Lambda-Viertel-Resonator für die zumindest eine Frequenz ausbildet.

3. Rotorsystem (10) nach Anspruch 1 oder 2, wobei die Hohlstruktur (31) zumindest abschnittsweise einen Helmholtz-Resonator für die zumindest eine Frequenz ausbildet.

4. Rotorsystem (10) nach einem der vorherigen Ansprüche, wobei die umlaufende Hohlstruktur (31) in Umlaufrichtung zumindest in Abschnitten, die in Umlaufrichtung parallel zur Gravitationskraft ausgerichtet sind, fluiddurchlässig ausgebildet ist.

5. Rotorsystem (10) nach einem der vorherigen Ansprüche, wobei die Hohlstruktur (31) zumindest eine Drainageöffnung (36) aufweist.

6. Rotorsystem (10) nach einem der vorherigen Ansprüche, wobei die Rotorblätter (21) einen um eine in Bezug auf die Rotationsachse (R) radiale Achse (X) variabel einstellbaren Anstellwinkel aufweisen und sich der gasdurchlässige Bereich (32a) in Bezug auf die Rotationsachse (R) in axialer Richtung zumindest über einen Bereich erstreckt, der die über die Anstellwinkel erreichbaren Rotorblattpositionen überdeckt.

7. Rotorsystem (10) nach einem der vorherigen Ansprüche, wobei der Anteil einer Porosität des gasdurchlässigen Bereichs (32a) 5% bis 90% beträgt.

8. Rotorsystem (10) nach Anspruch 7, wobei sich die Porosität von der Rotorebene (RA) aus in axialer Richtung in Bezug auf die Rotationsachse (R) verändert, insbesondere von der Rotorebene (RA) aus zu zumindest einer Seite nach außen hin zunimmt.

9. Rotorsystem (10) nach Anspruch 7 oder 8, wobei sich die Porosität in Umlaufrichtung des gasdurchlässigen Bereichs (32a) verändert.

10. Rotorsystem (10) nach einem der vorherigen Ansprüche, wobei der gasdurchlässige Bereich (32a) durch Mikroperforation, ein Lochblech und/oder ein Drahtgewebe gebildet wird.

11. Rotorsystem (10) nach einem der vorherigen Ansprüche, wobei durch die Hohlstruktur (31) im Wesentlichen eindringende akustische Wellen in einem breitbandigen Frequenzbereich absorbiert werden.

12. Rotorsystem (10) nach einem der vorherigen Ansprüche, wobei durch die Hohlstruktur (31) im Wesentlichen eindringende akustische Wellen in einem Frequenzbereich von 30 Hz bis 1500 Hz zumindest teilweise absorbiert werden.

13. Rotorsystem (10) nach einem der vorherigen Ansprüche, wobei das Rotorsystem (10) zumindest eine Tragstrebe (22) umfasst, die auf einer Luftansaugseite (41) des Rotorsystems (10) angeordnet ist.

14. Rotorsystem (10) nach Anspruch 13, wobei die zumindest eine Tragstrebe (22) in Bezug auf die Rotationsachse (R) exzentrisch angeordnet ist.

## Claims

1. Rotor system (10) for an aircraft (1), comprising:
a rotor (20) configured to be driven and having multiple rotor blades (21) disposed about an axis of rotation (R) of the rotor (20) substantially radially, wherein a plane perpendicular to the axis of rotation (R), which extends through the rotor blades (21) in a radial direction, forms a rotor plane (RA), and
a rotor shroud (30), which surrounds the rotor (20) circumferentially with regard to the axis of rotation (R) and which confines an air duct (40) of the rotor (20) extending in an axial direction of the axis of rotation (R),
wherein the rotor shroud (30) forms a hollow structure (31) extending circumferentially with regard to the axis of rotation (R), wherein the hollow structure (31) has on its circumferential face (32) facing the rotor (20) in the radial direction at least in a section thereof an area permeable to gas (32a), wherein the rotor plane (RA) intersects the area (32a) permeable to gas, and
wherein the hollow structure (31) is configured such that acoustic waves of at least one frequency penetrating through the area permeable to gas (32a) into the hollow structure (31) are at least partially absorbed by the hollow structure (31),
**characterized in that** the rotor shroud comprises a primary structure formed by the hollow structure in conjunction with the area permeable to gas formed at least in a section thereof, which primary structure serves both as an aerodynamic liner and as an aeroacoustic liner without necessitating further separate lining elements, and wherein the hollow space formed by the hollow structure extends continuously in the circumferential direction.

2. Rotor system (10) according to claim 1, wherein a circumferential face (33) of the hollow structure (31) opposite the area permeable to gas (32a) on a side facing away from the rotor blades (21) is spaced apart in such a way that the area permeable to gas (32a) forms, at least in a section, a lambda quarter resonator with the opposing circumferential face (33) for the at least one frequency.

3. Rotor system (10) according to claim 1 or 2, wherein the hollow structure (31) forms, at least in a section, a Helmholtz-resonator for the at least one frequency.

4. Rotor system (10) according to one of the preceding claims, wherein the circumferential hollow structure (31) is designed as being fluid-permeable in the circumferential direction at least in sections, which sections are aligned in parallel to the gravitational force in the circumferential direction.

5. Rotor system (10) according to one of the preceding claims, wherein the hollow structure (31) comprises at least one drainage opening (36).

6. Rotor system (10) according to one of the preceding claims, wherein the rotor blades (21) have an angle of attack that is variably adjustable about an axis (X) that is radial with respect to the axis of rotation (R) and the area permeable to gas (32a) extends an axial direction with respect to the axis of rotation (R) at least over an area that covers the rotor blade positions that can be accomplished via the angles of attack.

7. Rotor system (10) according to one of the preceding claims, wherein the fraction of porosity of the area permeable to gas (32a) is between 5% to 90%.

8. Rotor system (10) according to claim 7, wherein the porosity varies starting from the rotor plane (RA) in the axial direction in relation to the axis of rotation (R), in particular increases starting from the rotor plane (RA) towards at least one side in the outward direction.

9. Rotor system (10) according to claim 7 or 8, wherein the porosity varies in the circumferential direction of the area permeable to gas (32a).

10. Rotor system (10) according to one of the preceding claims, wherein the area permeable to gas (32a) is formed by microperforation, a perforated metal plate and/or a wire mesh.

11. Rotor system (10) according to one of the preceding claims, wherein the hollow structure (31) substantially absorbs penetrating acoustic waves in a broadband frequency range.

12. Rotor system (10) according to one of the preceding claims, wherein the hollow structure (31) substantially absorbs penetrating acoustic waves in a frequency range from 30 Hz to 1500 Hz at least partially.

13. Rotor system (10) according to one of the preceding claims, wherein the rotor system (10) comprises at least one supporting strut (22) arranged on an air intake side (41) of the rotor system (10).

14. Rotor system (10) according to claim 13, wherein the at least one supporting strut (22) is arranged eccentrically with respect to the axis of rotation (R).

## Revendications

1. Système de rotor (10) pour un appareil de vol (1), comprenant :
un rotor pouvant être entraîné (20) avec plusieurs pales de rotor (21), qui sont disposées sensiblement radialement autour d'un axe de rotation (R) du rotor (20), dans lequel un plan perpendiculaire à l'axe de rotation (R), qui traverse les pales de rotor (21) dans la direction radiale, forme un plan de rotor (RA), et
un carénage de rotor (30), qui entoure le rotor (20) de manière périphérique par rapport à l'axe de rotation (R) et délimite un canal d'air (40) du rotor (20) s'étendant dans la direction axiale de l'axe de rotation (R),
dans lequel le carénage de rotor (30) forme une structure creuse (31) périphérique par rapport à l'axe de rotation (R), qui présente sur sa surface périphérique (32) tournée vers le rotor (20) dans la direction radiale au moins en partie une région perméable aux gaz (32a), dans lequel le plan de rotor (RA) coupe la région perméable aux gaz (32a), et
dans lequel la structure creuse (31) est configurée de telle sorte que des ondes acoustiques d'au moins une fréquence pénétrant dans la structure creuse (31) par la région perméable aux gaz (32a) soient au moins partiellement absorbées par la structure creuse (31), **caractérisé en ce que** le carénage de rotor présente une structure primaire formée par la structure creuse en coopération avec la région perméable aux gaz formée au moins en partie, qui forme aussi bien un revêtement aérodynamique qu'un revêtement aéroacoustique, sans qu'il soit nécessaire d'autres éléments de revêtement séparés, dans lequel la cavité formée par la structure creuse s'étend de manière continue dans la direction périphérique.

2. Système de rotor (10) selon la revendication 1, dans lequel une surface périphérique (33) de la structure creuse (31) opposée à la région perméable aux gaz (32a) sur un côté opposé aux pales de rotor (21) est espacée de telle sorte que la région perméable aux gaz (32a) forme avec la surface périphérique (33) opposée au moins en partie un résonateur quart d'onde pour l'au moins une fréquence.

3. Système de rotor (10) selon la revendication 1 ou 2, dans lequel la structure creuse (31) forme au moins en partie un résonateur de Helmholtz pour l'au moins une fréquence.

4. Système de rotor (10) selon l'une quelconque des revendications précédentes, dans lequel la structure creuse (31) périphérique est réalisée de manière perméable aux fluides dans la direction périphérique au moins en parties, qui sont orientées dans la direction périphérique parallèlement à la force de gravitation.

5. Système de rotor (10) selon l'une quelconque des revendications précédentes, dans lequel la structure creuse (31) présente au moins une ouverture de drainage (36).

6. Système de rotor (10) selon l'une quelconque des revendications précédentes, dans lequel les pales de rotor (21) présentent un angle d'incidence réglable de manière variable autour d'un axe (X) radial par rapport à l'axe de rotation (R) et la région perméable aux gaz (32a) s'étend par rapport à l'axe de rotation (R) dans la direction axiale au moins sur une région qui recouvre les positions des pales de rotor pouvant être atteintes par l'angle d'incidence.

7. Système de rotor (10) selon l'une quelconque des revendications précédentes, dans lequel la proportion d'une porosité des régions perméables aux gaz (32a) est de 5 % à 90 %.

8. Système de rotor (10) selon la revendication 7, dans lequel la porosité est modifiée à partir du plan de rotor (RA) dans la direction axiale par rapport à l'axe de rotation (R), en particulier à partir du plan de rotor (RA) vers au moins un côté vers l'extérieur.

9. Système de rotor (10) selon la revendication 7 ou 8, dans lequel la porosité est modifiée dans la direction périphérique des régions perméables aux gaz (32a).

10. Système de rotor (10) selon l'une quelconque des revendications précédentes, dans lequel la région perméable aux gaz (32a) est formée par microperforation, une tôle perforée et/ou un tissu métallique.

11. Système de rotor (10) selon l'une quelconque des revendications précédentes, dans lequel des ondes acoustiques pénétrant essentiellement dans la structure creuse (31) sont absorbées dans une région de fréquence à large bande.

12. Système de rotor (10) selon l'une quelconque des revendications précédentes, dans lequel des ondes acoustiques pénétrant essentiellement dans la structure creuse (31) sont au moins partiellement absorbées dans une région de fréquence de 30 Hz à 1500 Hz.

13. Système de rotor (10) selon l'une quelconque des revendications précédentes, dans lequel le système de rotor (10) comprend au moins une entretoise de support (22) qui est disposée sur un côté d'aspiration d'air (41) du système de rotor (10).

14. Système de rotor (10) selon la revendication 13, dans lequel l'au moins une entretoise de support (22) est disposée de manière excentrique par rapport à l'axe de rotation (R).
